# EUROPÄISCHE PATENTSCHRIFT

(11) **EP 3 003 774 B1**
(45) Veröffentlichungstag und Bekanntmachung des Hinweises auf die Patenterteilung: **02.08.2017**
(21) Anmeldenummer: 14755051.1
(22) Anmeldetag: 18.08.2014
(51) Int. Cl.: B60L 11/18

(54) **LADUNG VON BATTERIEFAHRTFÄHIGEN STRASSENFAHRZEUGEN**
CHARGING OF ROAD VEHICLES CAPABLE OF BEING BATTERY DRIVEN
CHARGE DE VÉHICULES ROUTIERS APTES À FONCTIONNER SUR BATTERIE

(30) Priorität: 22.08.2013 DE 102013216700
(43) Veröffentlichungstag der Anmeldung: 13.04.2016
(73) Patentinhaber: Siemens Aktiengesellschaft, 80333 München (DE)
(72) Erfinder: BOLIK, Ulrich, 46240 Bottrop (DE); LINNHÖFER, Martin, 45259 Essen (DE)
(86) Internationale Anmeldenummer: PCT/EP2014/067561
(87) Internationale Veröffentlichungsnummer: WO 2015/024900

(56) Entgegenhaltungen:
- DE-A1- 2 330 255
- DE-A1- 3 101 655
- JP-A- 2001 128 304
- US-A- 3 955 657
- US-A1- 2008 277 173
- US-A1- 2013 113 279
- US-A1- 2013 193 918
- US-A1- 2013 193 919

## Beschreibung

Die vorliegende Erfindung betrifft ein Ladeverfahren für ein batteriefahrtfähiges Straßenfahrzeug.

Die vorliegende Erfindung betrifft weiterhin ein batteriefahrtfähiges Straßenfahrzeug und eine Ladestation für ein derartiges Straßenfahrzeug.

Die vorliegende Erfindung betrifft weiterhin ein Fahrzeugsystem, bestehend aus einer Anzahl von batteriefahrtfähigen Straßenfahrzeugen und einer Anzahl von Ladestationen.

Der Begriff "Batteriefahrt" ist bereits bei Straßenbahnen und O-Bussen bekannt. Bei Straßenbahnen und O-Bussen ist mit dem Begriff "Batteriefahrt" gemeint, dass im Falle eines Ausfalls der elektrischen Energieversorgung - die im Regelfall über die Oberleitung erfolgt - unter deutlich eingeschränkten Bedingungen und über sehr kurze Strecken ein kurzzeitiger Notbetrieb möglich ist, um beispielsweise das Fahrzeug langsam aus einem Kreuzungsbereich herauszufahren. Im Rahmen der vorliegenden Erfindung ist der Begriff "Batteriefahrt" jedoch nicht in diesem Sinne gemeint. Gemeint ist vielmehr, dass das Straßenfahrzeug zwar von Zeit zu Zeit seinen elektrischen Energiespeicher - in der Regel eine Batterie - nachladen muss, im übrigen aber in vollem Umfang leistungsfähig ist, obwohl der elektrische Antrieb des Straßenfahrzeugs während des normalen Fahrbetriebes ausschließlich aus dem elektrischen Energiespeicher gespeist wird.

In Städten besteht mehr und mehr die Notwendigkeit, den Kohlendioxidausstoß zu reduzieren. Es sind daher Bestrebungen im Gange, den öffentlichen Personennahverkehr und teilweise auch den Lieferverkehr im Innenstadtbereich von Städten mit Straßenfahrzeugen zu realisieren, die entweder rein elektrisch fahren oder zumindest mit Hybrid-Antrieben ausgerüstet sind, bei denen also auch eine reine Batteriefahrt möglich ist.

Die Kapazität von Batterien und anderen elektrischen Energiespeichern ist - zumindest derzeit - noch nicht ausreichend, um die Energiemenge zu speichern, die notwendig ist, um die entsprechenden Fahrzeuge in einen Tagesumlauf zu schicken, das heißt ganztägig (oder mindestens mehrere Stunden am Stück) zu betreiben und den elektrischen Energiespeicher nur in größeren Zeitabständen - beispielsweise über Nacht - wieder aufzuladen. Es ist daher erforderlich, den elektrischen Energiespeicher während des Tages mehrmals nachzuladen. Hierfür ist es erforderlich, an hinreichend vielen Stellen im Innenstadtbereich Ladestationen für derartige Straßenfahrzeuge anzuordnen.

Für den Ladevorgang existieren weiterhin verschiedene Randbedingungen. So sollte beispielsweise der Ladevorgang möglichst kurz sein. Aus diesem Grund ist eine hohe Ladeleistung erforderlich. Die geforderte Ladeleistung liegt oftmals oberhalb von 100 kW, teilweise sogar deutlich oberhalb von 100 kW. Weiterhin sollte dem Fahrzeugführer vorzugsweise keine Handhabung von kabelgebundenen Steckverbindungen und dergleichen zugemutet werden. Zum einen sind beispielsweise die zugehörigen Kabel und Stecker aufgrund der erforderlichen hohen Spannungen, Ströme und Leistungen relativ schwer und voluminös. Des weiteren dürfen Passanten im Bereich des Straßenfahrzeugs nicht in Gefahr gebracht werden und sollten möglichst auch nicht behindert werden. Ein weiterer Aspekt ist, dass das Gesamtgewicht des Straßenfahrzeugs ein kritischer Faktor ist. Daher sollte das dem Ladevorgang zu Grunde liegende Prinzip derart gewählt sein, dass auf dem Straßenfahrzeug möglichst wenige zusätzliche Komponenten installiert werden müssen.

Es ist ein System bekannt, bei welchem Ladestationen vorhanden sind, an denen dem Straßenfahrzeug die elektrische Energie mittels induktiver Leistungsübertragung zugeführt wird. Dieses System birgt jedoch Risiken im Bereich der Störstrahlung. Durch die hervorgerufenen elektromagnetischen Felder bewirkte mögliche Langzeitschäden für Personen sind nicht auszuschließen. Weiterhin sind bei diesem System schwere Komponenten auf dem Straßenfahrzeug erforderlich.

In dem Fachaufsatz "Österreich steht unter Strom", erschienen in "Pictures of the Future", Frühjahr 2013, Seiten 106 und 107, ist ein in Wien (Österreich) installiertes System beschrieben, bei welchem die Batterie des Straßenfahrzeugs über die Oberleitung des bereits vorhandenen Straßenbahnnetzes geladen wird. In diesem Fall weist das Straßenfahrzeug einen DC/DC-Wandler auf, mittels dessen die Spannung der Oberleitung auf die Spannung des Straßenfahrzeugs umgesetzt wird. Auch dieses System erfordert relativ schwere Komponenten auf dem Straßenfahrzeug. Beispielsweise weist bereits bei einer Ladeleistung von nur 60 kW der DC/DC-Wandler eine Masse von rund 230 kg auf. Weiterhin ist dieses Konzept nur realisierbar, wenn bereits ein Straßenbahnnetz vorhanden ist. Eine Lösung für das obengenannte Problem ist bekannt aus der Offenlegungsschrift US2013/113279 A1 (Hatanaka). Seit kurzem ist in Genf ein System im Versuchsbetrieb, das ein Ladeverfahren für ein batteriefahrtfähiges Straßenfahrzeug realisiert,
- wobei das Straßenfahrzeug eine Ladestation anfährt,
- wobei eine auf dem Straßenfahrzeug angeordnete Steuereinrichtung eine an einer Oberseite des Straßenfahrzeugs auf dem Straßenfahrzeug angeordnete Kontaktanordnung nach oben an von unten zugängliche Kontaktelemente heranfährt,
- wobei ein Ladestrom über die Kontaktelemente der Ladestation und die Kontaktanordnung des Straßenfahrzeugs in eine Batterie des Straßenfahrzeugs eingespeist wird.
Die Offenlegungsschrift US2013/193918 A1 (Sarkar et al) offenbart eine ähnliche Ladestation für ein Straßenfahrzeug. Die Aufgabe der vorliegenden Erfindung besteht darin, Möglichkeiten zu schaffen, mittels derer die Randbedingungen des Ladevorgangs auf einfache Weise erfüllt werden können.

Die Aufgabe wird durch ein Ladeverfahren mit den Merkmalen des Anspruchs 1 gelöst. Vorteilhafte Ausgestaltungen des erfindungsgemäßen Ladeverfahrens sind Gegenstand der abhängigen Ansprüche 2 bis 9.

Erfindungsgemäß weist das Ladeverfahren die Merkmale auf,
- dass das Straßenfahrzeug eine Ladestation anfährt,
- dass unter Steuerung durch eine auf dem Straßenfahrzeug angeordnete Steuereinrichtung eine an einer Oberseite des Straßenfahrzeugs auf dem Straßenfahrzeug angeordnete Kontaktanordnung und oberhalb des Straßenfahrzeugs angeordnete Kontaktelemente miteinander in Kontakt gebracht werden,
- dass die Steuereinrichtung des Straßenfahrzeugs leitungslos an eine an der Ladestation angeordnete Steuereinrichtung einen Schaltbefehl übermittelt,
- dass die Steuereinrichtung der Ladestation die Kontaktelemente aufgrund des Schaltbefehls unter Spannung setzt, so dass ein Ladestrom aus einem Wechselspannungsnetz über die Kontaktelemente der Ladestation, die Kontaktanordnung des Straßenfahrzeugs und einen Ladestromrichter in einen elektrischen Energiespeicher des Straßenfahrzeugs eingespeist wird, und
- dass der Ladestromrichter in Abhängigkeit von von der Steuereinrichtung des Straßenfahrzeugs vorgegebenen Sollwerten eine vom Ladestromrichter abgegebene Ausgangsspannung und/oder den Ladestrom einstellt.

Durch diese Ausgestaltung wird zunächst erreicht, dass eine Gefährdung oder Behinderung von Passanten nahezu ausgeschlossen ist. Denn die Kontaktelemente der Ladestation können in einer Höhe angeordnet werden, die deutlich oberhalb der Bauhöhe des Straßenfahrzeugs liegt. Insbesondere können die Kontaktelemente in einer Höhe angeordnet werden, die bei Oberleitungssystemen allgemein üblich ist, also typischerweise rund 4 m bis 5 m über Fahrbahnhöhe. Aufgrund der leitungsgebundenen Übertragung des Ladestroms werden weiterhin keine hochfrequenten elektromagnetischen Felder generiert, so dass ein derartiges Stör- und Gefahrenpotenzial ebenfalls ausgeschlossen ist. Aufgrund der leitungsgebundenen Übertragung des Ladestroms sind weiterhin auf einfache Weise ein hoher Ladestrom und eine hohe Ladeleistung realisierbar. Die auf dem Straßenfahrzeug angeordnete Kontaktanordnung kann so konstruiert werden, wie dies für Stromabnehmer von Straßenbahnen, Eisenbahnen und dergleichen mehr allgemein bekannt ist. Insbesondere kann die Kontaktanordnung voll- oder halbautomatisch angehoben (d.h. von unten an die Kontaktelemente der Ladestation herangefahren) und abgesenkt (d.h. von den Kontaktelementen der Ladestation entfernt) werden. Auch die umgekehrte Vorgehensweise ist möglich, dass also die Kontaktanordnung des Straßenfahrzeugs bezüglich des Straßenfahrzeugs unbeweglich ist, so dass zum miteinander in Kontakt bringen die Kontaktelemente der Ladestation verfahren werden. Auch Mischformen sind möglich. Beispielsweise kann zwar die Kontaktanordnung des Straßenfahrzeugs in Vertikalrichtung bewegt werden, eine horizontale Ausgleichsbewegung zur genauen Positionierung kann jedoch, falls erforderlich, auf Seiten der Ladestation erfolgen. Im vollautomatischen Betrieb ist gar keine Aktion des Fahrzeugführers erforderlich, im halbautomatischen Betrieb beispielsweise lediglich ein Knopfdruck oder eine vergleichbare Bedienhandlung des Fahrzeugführers. Weiterhin ist es - mit Ausnahme der relativ kleinen und leichten Steuereinrichtung des Straßenfahrzeugs und eventuell ein paar Schützen - nicht erforderlich, auf dem Straßenfahrzeug in nennenswertem Umfang zusätzliche Komponenten vorzusehen.

Es ist möglich, dass der Ladestromrichter in der Ladestation angeordnet ist. In diesem Fall übermittelt vorzugsweise die Steuereinrichtung des Straßenfahrzeugs die von ihr vorgegebenen Sollwerte leitungslos an die Steuereinrichtung der Ladestation. Die Steuereinrichtung der Ladestation steuert in diesem Fall den Ladestromrichter.

Der Ladestrom wird vorzugsweise über die Kontaktelemente und die Kontaktanordnung sowohl von der Ladestation zum Straßenfahrzeug als auch vom Straßenfahrzeug zur Ladestation geführt. Eine Erdungsschiene oder vergleichbare bodenseitig angeordnete Einrichtung ist daher nicht erforderlich. Vorzugsweise wirkt jedoch die Kontaktanordnung des Straßenfahrzeugs mit den Kontaktelementen der Ladestation derart zusammen, dass während des Ladevorgangs das Straßenfahrzeug geerdet bzw. allgemein mit einem Schutzpotenzial verbunden wird. Beispielsweise kann hierfür ein eigenes Kontaktelement der Ladestation vorhanden sein, das mit einem entsprechenden Kontakt der Kontaktanordnung zusammenwirkt.

Alternativ ist es möglich, dass der Ladestromrichter im Straßenfahrzeug angeordnet ist. In diesem Fall steuert die Steuereinrichtung des Straßenfahrzeugs den Ladestromrichter.

Das Straßenfahrzeug weist - selbstverständlich - mindestens eine elektrische Maschine auf. Die elektrische Maschine wird in einem Fahrbetrieb des Straßenfahrzeugs üblicherweise mittels eines Traktionsstromrichters des Straßenfahrzeugs aus dem elektrischen Energiespeicher des Straßenfahrzeugs gespeist. Im Ladebetrieb des Straßenfahrzeugs wird hingegen vorzugsweise der Traktionsstromrichter als Ladestromrichter verwendet. Dadurch kann eine sowieso vorhandene Komponente - nämlich der Traktionsstromrichter - genutzt werden. Ein eigenständiger schwerer Ladestromrichter ist nicht erforderlich. Im ungünstigsten Fall ist es erforderlich, den Traktionsstromrichter etwas größer zu dimensionieren. Dies führt jedoch weder zu nennenswert höheren Kosten noch zu einem in nennenswertem Umfang höheren Gewicht oder Bauvolumen.

Für den Ladebetrieb des Ladestromrichters ist in der Regel eine Betriebsinduktivität erforderlich. Vorzugsweise wird im Ladebetrieb mindestens eine Wicklung der elektrischen Maschine als Betriebsinduktivität des Ladestromrichters verwendet. Dadurch kann auch die Betriebsinduktivität eingespart werden. Zumindest kann eine erforderliche Drossel kleiner dimensioniert werden.

Das Wechselspannungsnetz ist üblicherweise ein Drehstromnetz mit mehreren Phasen, insbesondere mindestens drei Phasen. Vorzugsweise ist in dem Fall, dass der Ladestromrichter auf dem Straßenfahrzeug angeordnet ist, für jede Phase jeweils ein eigenes Kontaktelement vorhanden. Dementsprechend weist die Kontaktanordnung des Straßenfahrzeugs für jede Phase jeweils einen eigenen Kontakt auf.

Weitergehende besondere Ausgestaltungen der Ladestation sind zwar möglich, aber nicht erforderlich. Insbesondere ist es nicht erforderlich, die Ladestation über ein eigenständiges Stromversorgungsnetz mit elektrischer Energie zu versorgen. Die Ladestation kann vielmehr aus dem öffentlichen Stromversorgungsnetz mit elektrischer Energie versorgt werden.

Vorzugsweise erfolgt mittels eines in der Ladestation angeordneten Transformators eine Potenzialtrennung der Kontaktelemente der Ladestation von einer Energieversorgung der Ladestation.

Die Aufgabe wird weiterhin durch ein batteriefahrtfähiges Straßenfahrzeug mit den Merkmalen des Anspruchs 10 gelöst. Vorteilhafte Ausgestaltungen des erfindungsgemäßen batteriefahrtfähigen Straßenfahrzeugs sind Gegenstand der abhängigen Ansprüche 11 bis 16.

Erfindungsgemäß wird ein batteriefahrtfähiges Straßenfahrzeug geschaffen,
- wobei das Straßenfahrzeug einen elektrischen Energiespeicher aufweist,
- wobei an einer Oberseite des Straßenfahrzeugs eine Kontaktanordnung angeordnet ist, die unter Steuerung durch eine auf dem Straßenfahrzeug angeordnete Steuereinrichtung mit oberhalb des Straßenfahrzeugs angeordneten Kontaktelementen einer Ladestation für das batteriefahrtfähige Straßenfahrzeug in Kontakt gebracht wird,
- wobei von der Steuereinrichtung des Straßenfahrzeugs leitungslos ein Schaltbefehl an eine an der Ladestation angeordnete Steuereinrichtung übermittelt wird, aufgrund dessen die Steuereinrichtung der Ladestation die Kontaktelemente unter Spannung setzt und ein Ladestrom aus einem Wechselspannungsnetz über die Kontaktelemente der Ladestation, die Kontaktanordnung des Straßenfahrzeugs und einen Ladestromrichter in den elektrischen Energiespeicher des Straßenfahrzeugs eingespeist wird,
- wobei von der Steuereinrichtung des Straßenfahrzeugs Sollwerte vorgegeben werden,
- wobei der Ladestromrichter in Abhängigkeit von den vorgegebenen Sollwerten eine vom Ladestromrichter abgegebene Ausgangsspannung und/oder den Ladestrom einstellt.

Die vorteilhaften Ausgestaltungen des batteriefahrtfähigen Straßenfahrzeugs korrespondieren im wesentlichen mit denen des Ladeverfahrens.

Die Aufgabe wird durch weiterhin durch eine Ladestation für ein batteriefahrtfähiges Straßenfahrzeug mit den Merkmalen des Anspruchs 17 gelöst. Vorteilhafte Ausgestaltungen der erfindungsgemäßen Ladestation sind Gegenstand der abhängigen Ansprüche 18 bis 24.

Erfindungsgemäß wird eine Ladestation für ein batteriefahrtfähiges Straßenfahrzeug geschaffen,
- wobei die Ladestation Kontaktelemente aufweist, die unter Steuerung durch eine auf dem Straßenfahrzeug angeordnete Steuereinrichtung mit einer an einer Oberseite des Straßenfahrzeugs auf dem Straßenfahrzeug angeordneten Kontaktanordnung in Kontakt gebracht werden,
- wobei eine an der Ladestation angeordnete Steuereinrichtung von der Steuereinrichtung des Straßenfahrzeugs leitungslos einen Schaltbefehl entgegennimmt,
- wobei die Steuereinrichtung der Ladestation die Kontaktelemente aufgrund des Schaltbefehls unter Spannung setzt, so dass ein Ladestrom aus einem Wechselspannungsnetz über die Kontaktelemente der Ladestation und die Kontaktanordnung des Straßenfahrzeugs in einen elektrischen Energiespeicher des Straßenfahrzeugs eingespeist wird.

Die vorteilhaften Ausgestaltungen der Ladestation korrespondieren im wesentlichen mit denen des Ladeverfahrens. Zusätzlich sind jedoch weitere vorteilhafte Ausgestaltungen möglich.

So ist es beispielsweise insbesondere möglich, dass die Kontaktelemente als langgestreckte, parallel zueinander verlaufende Kontaktelemente ausgebildet sind. Die Kontaktelemente können also ähnlich wie die Oberleitung einer elektrischen Straßenbahn ausgebildet sein. Diese Ausgestaltung kann in dem Fall, dass die Kontaktelemente nebeneinander oder übereinander angeordnet sind, den Vorteil bieten, dass gegebenenfalls die elektrischen Energiespeicher mehrerer Straßenfahrzeuge gleichzeitig über dieselben Kontaktelemente geladen werden können. Weiterhin bietet diese Ausgestaltung den Vorteil, dass nur eine Positionierung des Straßenfahrzeugs quer zu den Kontaktelementen erfolgen muss. In der Erstreckungsrichtung der Kontaktelemente ist die Positionierung des Straßenfahrzeugs relativ unkritisch.

Weiterhin ist es möglich, dass die Ladestation eine Überdachung aufweist, mittels derer die Kontaktelemente überdacht sind. Dadurch sind die Kontaktelemente in erheblichem Umfang geschützt, beispielsweise vor Schnee und Regen.

Die Aufgabe wird weiterhin durch ein Fahrzeugsystem gelöst, bestehend aus einer Anzahl von erfindungsgemäßen batteriefahrtfähigen Straßenfahrzeugen und einer Anzahl von erfindungsgemäßen Ladestationen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Fahrzeugsystem,
- FIG 2 und 3: je ein Blockschaltbild einer Ladestation und eines Straßenfahrzeugs,
- FIG 4: die Ladestation und das Straßenfahrzeug von FIG 2 von vorne,
- FIG 5: die Ladestation und das Straßenfahrzeug von FIG 2 von der Seite,
- FIG 6: die Ladestation und das Straßenfahrzeug von FIG 3 von vorne,
- FIG 7: die Ladestation und das Straßenfahrzeug von FIG 3 von der Seite,
- FIG 8: eine Modifikation der Ladestation von FIG 2 und
- FIG 9: eine Modifikation der Ladestation von FIG 3.

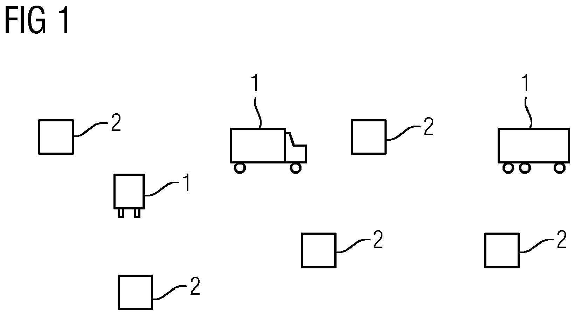

Gemäß FIG 1 besteht ein Fahrzeugsystem aus einer Anzahl von Straßenfahrzeugen 1 und einer Anzahl von Ladestationen 2. Sowohl die Anzahl an Straßenfahrzeugen 1 als auch die Anzahl an Ladestationen 2 ist prinzipiell beliebig. Weiterhin sind die beiden Anzahlen unabhängig voneinander. Es ist möglich, dass nur ein einziges Straßenfahrzeug 1, einige wenige Straßenfahrzeuge 1 oder viele Straßenfahrzeuge 1 dem System angehören. In analoger Weise kann auch die Anzahl an Ladestationen 2 variieren. Die Straßenfahrzeuge 1 sind vorzugsweise Nutzfahrzeuge, beispielsweise Lastkraftwagen, Lieferwagen, Omnibusse und dergleichen mehr.

Nachfolgend werden in Verbindung mit den weiteren FIG jeweils nur ein einzelnes Straßenfahrzeug 1 und jeweils nur eine einzelne Ladestation 2 näher erläutert. Die Aussagen sind jedoch auch für die anderen, nicht näher erläuterten Straßenfahrzeuge 1 und Ladestationen 2 gültig.

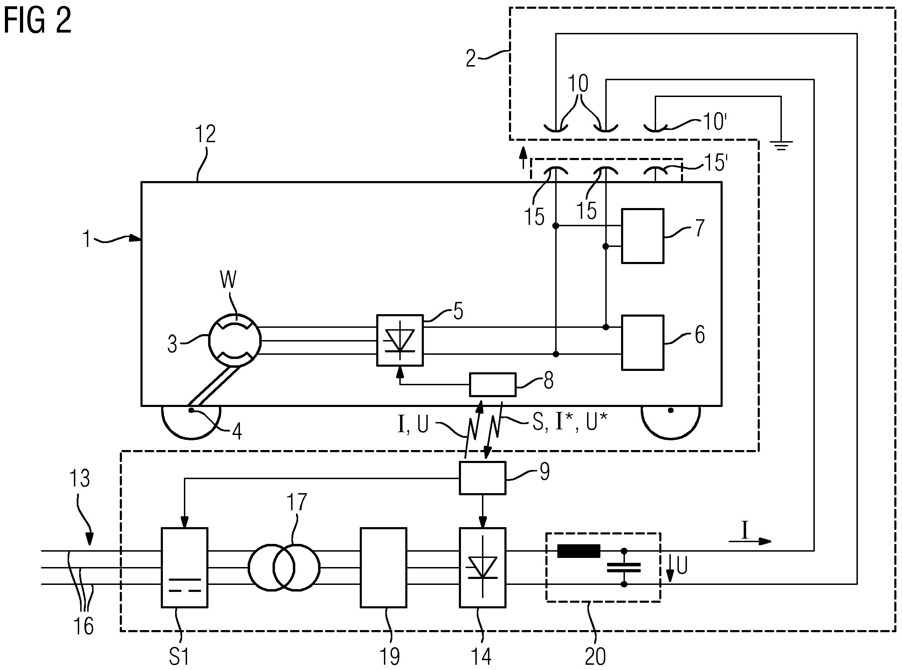

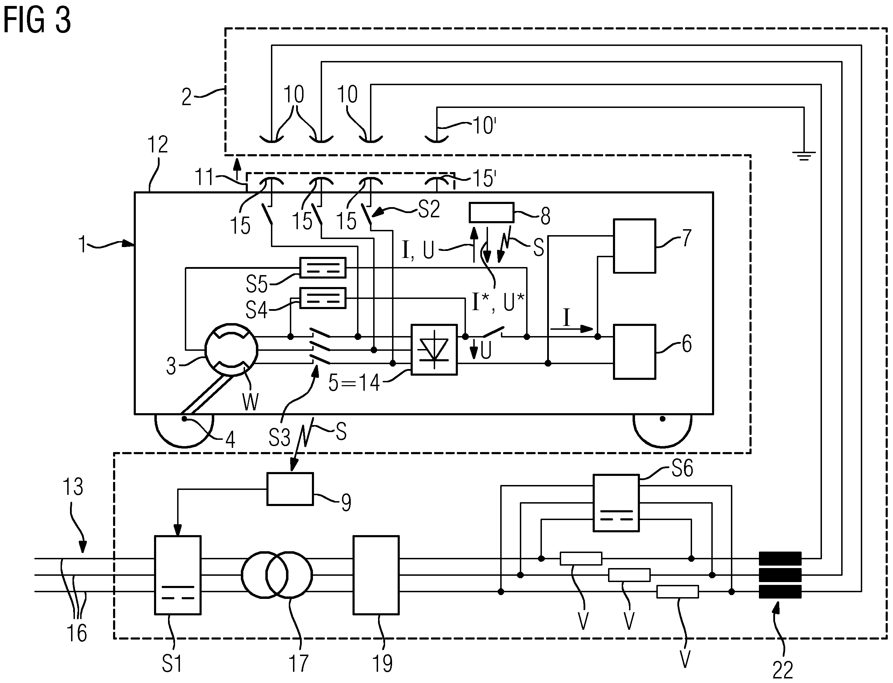

Das Straßenfahrzeug 1 ist batteriefahrtfähig. Es weist daher - siehe die FIG 2 und 3 - mindestens eine elektrische Maschine 3 auf, die in einem Fahrbetrieb des Straßenfahrzeugs 1 auf eine Antriebsachse 4 des Straßenfahrzeugs 1 wirkt. Die elektrische Maschine 3 weist zumindest im Stator eine Wicklung W auf. Die Wicklung W ist in der Regel mehrphasig ausgebildet, beispielsweise dreiphasig. Die elektrische Maschine 3 wird im Fahrbetrieb des Straßenfahrzeugs 1 mittels eines Traktionsstromrichters 5 aus einem elektrischen Energiespeicher 6 des Straßenfahrzeugs 1 gespeist. Weiterhin sind oftmals weitere elektrisch betriebene Einrichtungen 7 vorhanden, wie beispielsweise Hilfsantriebe, eine Beleuchtung und dergleichen mehr. Die weiteren elektrisch betriebenen Einrichtungen 7 sind im Rahmen der vorliegenden Erfindung von untergeordneter Bedeutung und werden daher nicht näher erläutert.

Der elektrische Energiespeicher 6 kann prinzipiell beliebig ausgebildet sein, beispielsweise als Bleiakku, als Li-Ionen-Speicher, als Li-Metallhydrid-Speicher und dergleichen mehr. Auch eine Ausgestaltung basierend auf kapazitiver Ladungsspeicherung ist denkbar. Unabhängig von seiner konkreten Ausgestaltung weist der elektrische Energiespeicher 6 jedoch eine begrenzte Kapazität auf. Er muss daher von Zeit zu Zeit geladen werden. Zum Laden des elektrischen Energiespeichers 6 fährt das Straßenfahrzeug 1 eine der Ladestationen 2 an. Die FIG 2 bis 7 zeigen das Straßenfahrzeug 1 und die betreffende Ladestation 2. Die nachfolgenden Ausführungen beziehen sich, sofern nicht ausdrücklich etwas anderes ausgeführt ist, stets auf diesen Zustand, in welchem das Straßenfahrzeug 1 die betreffende Ladestation 2 angefahren hat.

Gemäß den FIG 2 und 3 wird zum Laden des elektrischen Energiespeichers 6 wie folgt vorgegangen:
Beim Annähern des Straßenfahrzeugs 1 an die Ladestation 2 oder nach dem (korrekten) Positionieren des Straßenfahrzeugs 1 an der Ladestation 2 übermittelt eine Steuereinrichtung 8 des Straßenfahrzeugs 1 an eine Steuereinrichtung 9 der Ladestation 2 einen Schaltbefehl S. Die Steuereinrichtung 9 der Ladestation 2 ist an der Ladestation 2 angeordnet. Sie nimmt den Schaltbefehl S entgegen. Die Übermittlung von der Steuereinrichtung 8 des Straßenfahrzeugs 1 an die Steuereinrichtung 9 der Ladestation 2 erfolgt leitungslos, beispielsweise per Funk. Die leitungslose Kommunikation zwischen den beiden Steuereinrichtungen 8, 9 gilt auch für weitere zwischen den beiden Steuereinrichtungen 8, 9 ausgetauschten Informationen.

Aufgrund des Schaltbefehls S setzt die Steuereinrichtung 9 der Ladestation 2 Kontaktelemente 10 der Ladestation 2 unter Spannung. Beispielsweise kann die Steuereinrichtung 9 der Ladestation 2 zu diesem Zweck ein Schütz S1 entsprechend ansteuern. Nach dem (korrekten) Positionieren des Straßenfahrzeugs 1 an der Ladestation 2 werden unter Steuerung durch eine Steuereinrichtung 8 des Straßenfahrzeugs 1 weiterhin die Kontaktelemente 10 der Ladestation 2 und eine Kontaktanordnung 11 des Straßenfahrzeugs 1 miteinander in Kontakt gebracht. Die Kontaktelemente 10 sind oberhalb des Straßenfahrzeugs 1 angeordnet. Die Kontaktanordnung 11 ist an einer Oberseite 12 des Straßenfahrzeugs 1 auf dem Straßenfahrzeug 1 angeordnet. Aufgrund der Ansteuerung durch die Steuereinrichtung 8 des Straßenfahrzeugs 1 kann beispielsweise die Kontaktanordnung 11 - siehe in den FIG 2 und 3 einen entsprechenden Pfeil - nach oben an die Kontaktelemente 10 herangefahren werden. Die Kontaktelemente 10 sind in diesem Fall von unten zugänglich. Es sind jedoch auch andere Ausgestaltungen möglich. Beispielsweise können in kinematischer Umkehr die Kontaktelemente 10 - mit oder ohne Positionierung in horizontaler Richtung - auf die Kontaktanordnung 11 abgesenkt werden.

Aufgrund des Umstands, dass die Kontaktelemente 10 unter Spannung gesetzt sind und die Kontaktanordnung 11 und die Kontaktelemente 10 miteinander in Kontakt gebracht sind, wird ein Ladestrom I aus einem Wechselspannungsnetz 13 über die Kontaktelemente 10 der Ladestation 2, die Kontaktanordnung 11 des Straßenfahrzeugs 1 und einen Ladestromrichter 14 in den elektrischen Energiespeicher 6 des Straßenfahrzeugs 1 eingespeist. Der elektrische Energiespeicher 6 wird dadurch geladen. Der Ladestromrichter 14 stellt eine vom Ladestromrichter 14 abgegebene Ausgangsspannung U und/oder den Ladestrom I in Abhängigkeit von Sollwerten U* und/oder I* ein. Die Sollwerte U* und/oder I* werden von der Steuereinrichtung 8 des Straßenfahrzeugs 1 vorgegeben. Die Steuereinrichtung 8 umfasst zu diesem Zweck, das heißt zur sinnvollen Vorgabe der Sollwerte U* und/oder I*, unter anderem das Batteriemanagementsystem des elektrischen Energiespeichers 6.

Das Laden des elektrischen Energiespeichers 6 erfolgt in einem Ladebetrieb des Straßenfahrzeugs 1. Das Umschalten zwischen Fahrbetrieb und Ladebetrieb kann beispielsweise mit dem Anheben und Absenken der Kontaktanordnung 11 (bzw. allgemeiner mit dem miteinander in Kontakt bringen der Kontaktelemente 10 und der Kontaktanordnung 11 bzw. deren Trennung voneinander) zwangsgekoppelt sein. Der Ladebetrieb und der Fahrbetrieb des Straßenfahrzeugs 1 können gegeneinander verriegelt sein. In diesem Fall kann nur bei stillstehendem Straßenfahrzeug 1 ein Umschalten vom Fahrbetrieb in den Ladebetrieb und umgekehrt erfolgen. Alternativ kann der Fahrbetrieb auch möglich sein, während die Kontaktelemente 10 und die Kontaktanordnung 11 miteinander in Kontakt stehen. In diesem Fall kann das Straßenfahrzeug 1 auch während des Ladevorgangs bewegt werden.

Es ist möglich, dass über die Kontaktelemente 10 und die Kontaktanordnung 11 ein Gleichstrom fließt. Dieser Fall ist in den FIG 2, 4 und 5 dargestellt und wird in Verbindung mit diesen FIG erläutert. Es ist alternativ möglich, dass über die Kontaktelemente 10 und die Kontaktanordnung 11 ein Wechselstrom fließt. Dieser Fall ist in den FIG 3, 6 und 7 dargestellt und wird in Verbindung mit diesen FIG erläutert.

Bei der Ausgestaltung der FIG 2, 4 und 5 ist der Ladestromrichter 14 in der Ladestation 2 angeordnet. In diesem Fall übermittelt die Steuereinrichtung 8 des Straßenfahrzeugs 1 die von ihr vorgegebenen Sollwerte U*, I* zunächst an die Steuereinrichtung 9 der Ladestation 2. Die Steuereinrichtung 9 der Ladestation 2 nimmt die Sollwerte U*, I* entgegen und steuert sodann den Ladestromrichter 14. Falls auf Seiten der Ladestation 2 die Ausgangsspannung U und/oder der Ladestrom I erfasst werden, übermittelt die Steuereinrichtung 9 der Ladestation 2 weiterhin vorzugsweise die erfassten Werte U, I an die Steuereinrichtung 8 des Straßenfahrzeugs 1. Vorzugsweise wird im Rahmen der Ausgestaltung der FIG 2, 4 und 5 weiterhin der Ladestrom I über die Kontaktelemente 10 und die Kontaktanordnung 11 sowohl von der Ladestation 2 zum Straßenfahrzeug 1 als auch vom Straßenfahrzeug 1 zur Ladestation 2 geführt. Insbesondere weist die Ladestation 2 somit für beide Stromrichtungen jeweils mindestens ein eigenes Kontaktelement 10 auf. Auch die Kontaktanordnung 11 weist für beide Stromrichtungen jeweils mindestens einen eigenen Kontakt 15 auf. Vorzugsweise ist weiterhin ein Schutzkontaktelement 10' vorhanden, das mit einem Schutzkontakt 15' der Kontaktanordnung 11 verbunden ist. Über das Schutzkontaktelement 10' und den Schutzkontakt 15' ist das Straßenfahrzeug 1 mit einem Schutzpotenzial verbunden, in der Regel Erde.

Bei der Ausgestaltung der FIG 2 wird vorzugsweise der Ladestromrichter 14 zunächst mit einem Ladestrom I von 0 betrieben. Die Ausgangsspannung U des Ladestromrichters 14 beträgt daher zu diesem Zeitpunkt vorzugsweise ebenfalls 0. Erst nach dem Kontaktieren der Kontaktanordnung 11 und der Kontaktelemente 10 übermittelt die Steuereinrichtung 8 des Straßenfahrzeugs 1 einen von 0 verschiedenen Sollwert I* für den Ladestrom I an die Steuereinrichtung 9 der Ladestation 2.

Bei der Ausgestaltung der FIG 3, 6 und 7 ist der Ladestromrichter 14 im Straßenfahrzeug 1 angeordnet. In diesem Fall steuert die Steuereinrichtung 8 des Straßenfahrzeugs 1 den Ladestromrichter 14 direkt. Theoretisch ist es möglich, zusätzlich zum Traktionsstromrichter 5 einen eigenen Ladestromrichter 14 vorzusehen. Vorzugsweise jedoch wird entsprechend der Darstellung in FIG 3 im Ladebetrieb des Straßenfahrzeugs 1 der Traktionsstromrichter 5 als Ladestromrichter 14 verwendet. Im Ladebetrieb wird somit die Kontaktanordnung 11 mit dem Traktionsstromrichter 5 elektrisch verbunden. Beispielsweise können zu diesem Zweck auf dem Straßenfahrzeug 1 Schütze S2 und S3 angeordnet sein. Das Schütz S2 wird das von der Steuereinrichtung 8 des Straßenfahrzeugs 1 im Ladebetrieb geschlossen und ansonsten - insbesondere im Fahrbetrieb - geöffnet wird. Das Schütz S3 wird von der Steuereinrichtung 8 des Straßenfahrzeugs 1 komplementär zum Schütz S2 angesteuert.

Für den Ladebetrieb ist oftmals eine Betriebsinduktivität erforderlich. Beispielsweise kann entsprechend der Darstellung in FIG 3 die Wicklung W der elektrischen Maschine 3 als Betriebsinduktivität des Ladestromrichters 14 verwendet werden. Insbesondere können zu diesem Zweck Schütze S4 und S5 vorhanden sein, die von der Steuereinrichtung 8 des Straßenfahrzeugs 1 im Ladebetrieb geschlossen und im Fahrbetrieb geöffnet werden.

Bei der Ausgestaltung der FIG 3 übermittelt die Steuereinrichtung 8 des Straßenfahrzeugs 1 den Schaltbefehl S vorzugsweise erst nach dem Kontaktieren der Kontaktanordnung 11 und der Kontaktelemente 10 an die Steuereinrichtung 9 der Ladestation 2. Alternativ oder zusätzlich können die Kontaktelemente 10 mit Vorwiderständen V versehen sein, welche nach dem Kontaktieren der Kontaktanordnung 11 und der Kontaktelemente 10 - beispielsweise mittels eines Schützes S6 - überbrückt werden.

Das Wechselspannungsnetz 13 ist in der Regel ein Drehstromnetz mit mehreren Phasen 16, beispielsweise drei Phasen 16. Vorzugsweise ist bei der Ausgestaltung gemäß FIG 3 für jede Phase 16 jeweils ein eigenes Kontaktelement 11 vorhanden. Hiermit korrespondierend weist die Kontaktanordnung 11 für jede Phase 16 vorzugsweise jeweils mindestens einen eigenen Kontakt 15 auf. Analog zur Ausgestaltung von FIG 2 ist auch bei der Ausgestaltung von FIG 3 ein Schutzkontaktelement 10' vorhanden, das mit einem Schutzkontakt 15' der Kontaktanordnung 11 verbunden ist. Über das Schutzkontaktelement 10' und den Schutzkontakt 15' ist das Straßenfahrzeug 1 mit dem Schutzpotenzial verbunden.

Sowohl bei der Ausgestaltung der FIG 2, 4 und 5 als auch bei der Ausgestaltung der FIG 3, 6 und 7 wird die Ladestation 2 vorzugsweise aus dem öffentlichen Stromversorgungsnetz 13 mit elektrischer Energie versorgt. Es kann sich bei der Nennspannung des Wechselspannungsnetzes 13 also beispielsweise um 3-Phasen-Wechselspannung von 400 V oder 690 V und 50 Hz oder 60 Hz handeln. Auch andere Spannungen sind möglich. Soweit erforderlich, kann mittels eines Transformators 17 eine Spannungsumsetzung erfolgen. Insbesondere kann - nicht aber muss - bei der Ausgestaltung der FIG 3, 6 und 7 eine Spannungsumsetzung auf ein dreiphasiges Drehstromsystem mit 300 V Nennspannung erfolgen.

Vorzugsweise ist der Transformators 17 stets vorhanden, also auch dann, wenn eine Spannungsumsetzung nicht erforderlich ist. Denn insbesondere bewirkt der Transformators 17 eine Potenzialtrennung der Kontaktelemente 10 der Ladestation 2 von der Energieversorgung der Ladestation 2.

Bei der Ausgestaltung gemäß FIG 3 ist der Transformator 17, sofern er vorhanden ist, als Drehstromtransformator ausgebildet. Auch bei der Ausgestaltung gemäß FIG 2 ist der Transformator 17, sofern er vorhanden ist, als Drehstromtransformator ausgebildet.

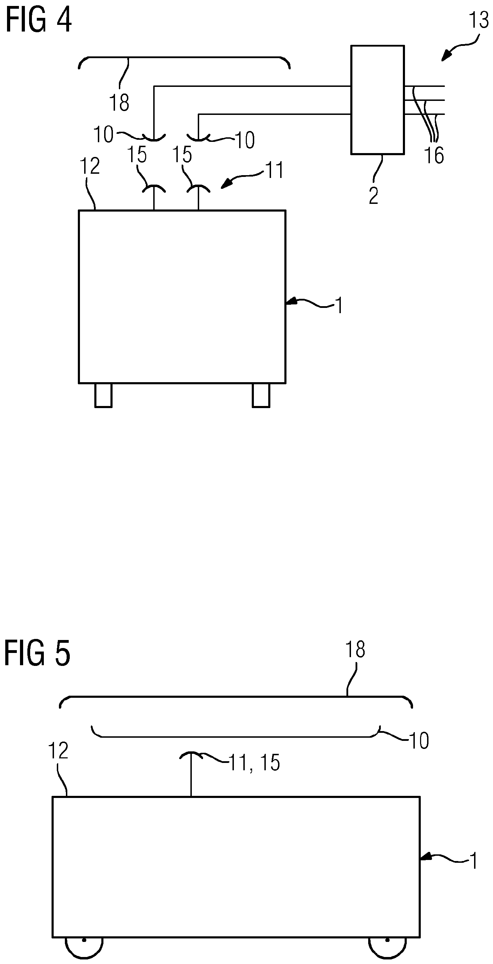

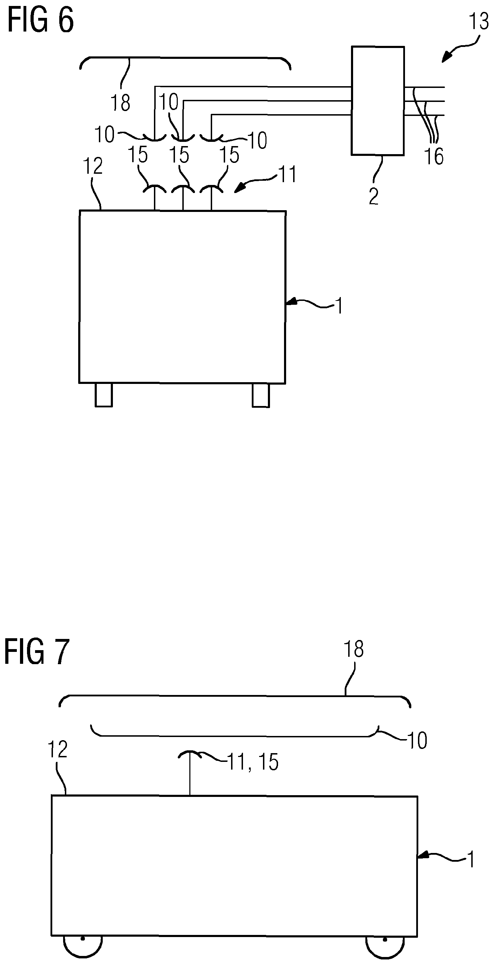

Bei beiden Ausgestaltungen - also sowohl bei der Ausgestaltung der FIG 2, 4 und 5 als auch bei der Ausgestaltung der FIG 3, 6 und 7 - sind die Kontaktelemente 10, 10' gemäß den FIG 5 und 7 vorzugsweise als langgestreckte, parallel zueinander verlaufende Kontaktelemente 10, 10' ausgebildet. Die Kontaktelemente 10, 10' bilden also sozusagen einen - wenn auch relativ kurzen - Abschnitt eines Oberleitungssystems. Durch diese Ausgestaltung kann erreicht werden, dass die Positionierung des Straßenfahrzeugs 1 in dessen Fahrtrichtung relativ unkritisch ist. Die Kontaktelemente 10, 10' können beispielsweise auf gleicher Höhe nebeneinander, auf gleicher Höhe hintereinander oder übereinander angeordnet sein.

Wie sich insbesondere aus der Darstellung der FIG 4 bis 7 ergibt, weist die Ladestation 2 weiterhin vorzugsweise eine Überdachung 18 auf, mittels derer die Kontaktelemente 10, 10' überdacht sind. Es ist möglich, dass die Kontaktelemente 10, 10' in die Überdachung 18 integriert sind.

Die vorliegende Erfindung kann weiterhin in verschiedener Hinsicht ergänzend ausgestaltet werden.

So kann beispielsweise - siehe die FIG 2 und 3 - dem Ladestromrichter 14 ein Filter 19 vorgeordnet sein. Weiterhin kann - siehe FIG 2 - dem Ladestromrichter 14 ein Filter 20 nachgeordnet sein. Das Filter 20 kann auch bei der Ausgestaltung gemäß FIG 3 vorhanden sein. Es ist dort lediglich der Übersichtlichkeit halber nicht mit dargestellt.

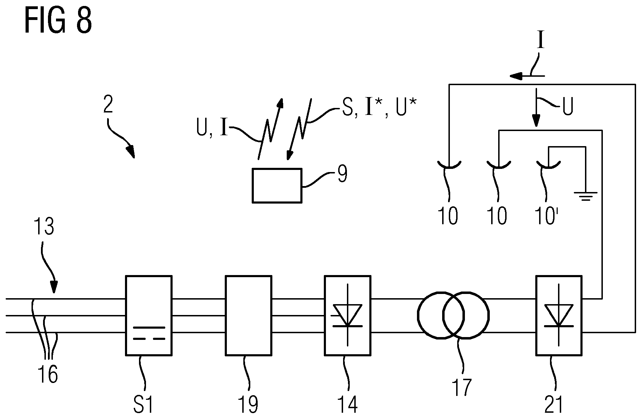

Bei der Ausgestaltung gemäß FIG 2 ist der Ladestromrichter 14 direkt oder über das Filter 20 mit den Kontaktelementen 10 verbunden. Alternativ ist es entsprechend der Darstellung in FIG 8 möglich, dass der Ladestromrichter 14 vor dem Transformator 17 angeordnet ist und die Ausgangsspannung des Transformators 17 mittels eines Gleichrichters 21 gleichgerichtet wird. In diesem Fall kann der Transformator 17 als einphasiger Transformator ausgebildet sein. Der Gleichrichter 21 kann alternativ als gesteuerter Gleichrichter oder als Diodengleichrichter ausgebildet sein.

Bei der Ausgestaltung der Ladestation 2 gemäß FIG 3 ist die Wicklung W im Ladebetrieb zwischen den Traktionsstromrichter 5 und den elektrischen Energiespeicher 6 geschaltet. Zwischen die Kontakte 15 der Kontaktanordnung 11 und den Traktionsstromrichter 5 sind hingegen keine Induktivitäten geschaltet. Vorzugsweise sind daher bei der Ausgestaltung gemäß FIG 3 den Kontaktelementen 10 Drosseln 22 vorgeordnet.

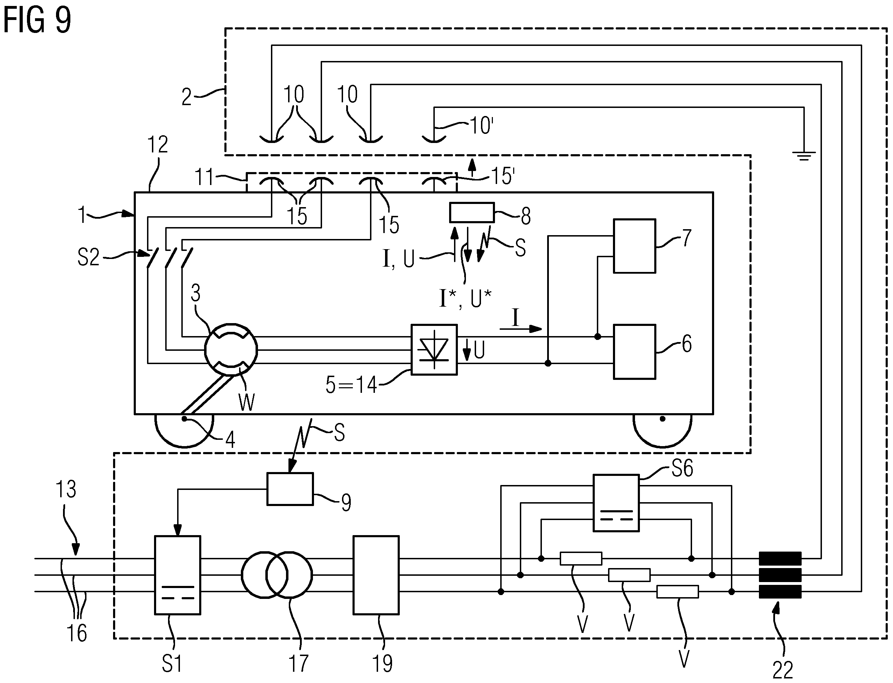

FIG 9 zeigt eine Modifikation der Ausgestaltung von FIG 3. Die Ausgestaltung gemäß FIG 9 entspricht weitgehend der Ausgestaltung von FIG 3. Nachstehend wird daher nur auf die Unterschiede näher eingegangen.

Gemäß FIG 9 ist die Wicklung W (bzw. deren einzelne Wicklungsstränge) im Ladebetrieb zwischen die Kontakte 15 und den Traktionsstromrichter 5 geschaltet. Durch eine geeignete, an sich bekannte Aufteilung der Wicklung W kann gewährleistet sein, dass trotz des Stromflusses durch die Wicklung W kein Drehmoment auf die Antriebsachse 4 wirkt. Alternativ kann eine mechanische Bremse eine Bewegung des Straßenfahrzeugs 1 verhindern. Bei der Ausgestaltung gemäß FIG 9 sind den Kontaktelementen 10 vorgeordnete Drosseln nicht erforderlich. Sie können jedoch vorhanden sein.

Weiterhin ist es sowohl bezüglich der Straßenfahrzeuge 1 als auch bezüglich der Ladestationen 2 möglich, diese mehrsystemfähig auszugestalten. Beispielsweise kann im Falle eines mehrsystemfähigen Straßenfahrzeugs 1 das Straßenfahrzeug 1 sich in Abhängigkeit von der Ausgestaltung der Ladestation 2 alternativ entsprechend der Darstellung in FIG 2 oder 8 oder entsprechend der Darstellung in FIG 3 oder 9 konfigurieren. Umgekehrt ist es im Falle einer mehrsystemfähigen Ladestation 2 ebenso möglich, dass die Ladestation 2 in Abhängigkeit von der Ausgestaltung des Straßenfahrzeugs 1 alternativ entsprechend der Darstellung in FIG 2 und 8 über zwei Kontaktelemente 10 einen Gleichstrom oder entsprechend der Darstellung in FIG 3 und 9 über drei Kontaktelemente 10 einen Drehstrom an das Straßenfahrzeug 1 abgibt.

Weiterhin ist es möglich, dass auf Seiten der Ladestation 2 eine automatisierte Erkennung des Straßenfahrzeugs 1 erfolgt, so dass eine automatisierte Abrechnung erfolgen kann. Alternativ ist beispielsweise ein direktes Bezahlen - beispielsweise mit Bargeld oder Geldkarten - denkbar.

Weiterhin ist es möglich, an der Ladestation 2 und/oder dem Straßenfahrzeug 1 miteinander zusammenwirkende Positionserfassungseinrichtungen anzuordnen. Dadurch kann unter Umständen eine vollautomatisierte Positionierung des Straßenfahrzeugs 1 an der Ladestation 2 erfolgen. Alternativ können dem Fahrzeugführer des Straßenfahrzeugs 1 in automatisierter Form Hinweise für eine Korrektur der Position des Straßenfahrzeugs 1 gegeben werden. Auch ist es möglich, dass innerhalb gewisser Grenzen eine automatische Längs- und/oder Querpositionierung der Kontaktelemente 10 und/oder der Kontaktanordnung 11 erfolgt.

Die Ladestation 2 kann sehr platzsparend gebildet sein. Die einzigen Elemente, die zwangsweise oberhalb der Fahrbahn angeordnet sein müssen, sind die Kontaktelemente 10. Alle anderen Komponenten - beispielsweise das Schütz S1, der Transformator 17, das Filter 19 und, falls auf Seiten der Ladestation 2 vorhanden, der Ladestromrichter 14 und das Filter 20 - können nach Bedarf überirdisch oder unterirdisch angeordnet sein.

Die vorliegende Erfindung weist viele Vorteile auf. Einige dieser Vorteile werden nachstehend aufgeführt.

So können insbesondere die Ladestationen 2 aufgebaut werden, ohne über die Ladestationen 2 als solche hinaus zusätzlich eine Infrastruktur aufbauen zu müssen. Denn die einzige erforderliche Systemvoraussetzung ist das öffentliche Stromversorgungsnetz 13, das in Städten sowieso vorhanden ist. Weiterhin können die Ladestationen 2 beispielsweise mit den Endhaltestellen von Buslinien zusammenfallen. Da insbesondere Omnibusse (Linienbusse) an den Endhaltestellen oftmals mehrere Minuten pausieren, kann diese Pause ohne weiteres zugleich zum Laden des Straßenfahrzeugs 1 genutzt werden. Weiterhin können alle für den Ladevorgang erforderlichen schweren Komponenten außerhalb des Straßenfahrzeugs 1 angeordnet sein. Diese Komponenten müssen weiterhin nicht auf die erhöhten Anforderungen, die üblicherweise auf Straßenfahrzeug 1 herrschen, ausgerichtet sein. So ist beispielsweise ein Schutz vor Schock, Vibration und dergleichen mehr nicht erforderlich. Das Anheben und Absenken der Kontaktanordnung 11 (= Stromabnehmer) oder der Kontaktelemente 10 kann vollautomatisch oder auf Knopfdruck erfolgen. Eine weitergehende Bedienhandlung des Fahrzeugführers oder einer anderen Person ist nicht erforderlich. Die spannungsführenden Teile der Ladestation 2 (= Kontaktelemente 11) können in der für Oberleitungen üblichen Höhe angeordnet sein, so dass sie für Passanten nicht zugänglich sind. Aufgrund des Umstands, dass bei der vorliegenden Erfindung die Kontaktanordnung 11 (= Stromabnehmer) nur im Stillstand des Straßenfahrzeugs 1 mit den Kontaktelementen 10 kontaktiert wird, kann weiterhin die Kontaktanordnung 11 sehr einfach konstruiert sein.

Im wesentlichen betrifft die vorliegende Erfindung somit folgenden Sachverhalt:
Ein batteriefahrtfähiges Straßenfahrzeug 1 fährt eine Ladestation 2 an. Eine auf dem Straßenfahrzeug 1 angeordnete Steuereinrichtung 8 bringt eine an einer Oberseite 12 des Straßenfahrzeugs 1 auf dem Straßenfahrzeug 1 angeordnete Kontaktanordnung 11 mit oberhalb des Straßenfahrzeugs 1 angeordneten Kontaktelementen 10 der Ladestation 2 in Kontakt. Die Steuereinrichtung 8 des Straßenfahrzeugs 1 übermittelt leitungslos an eine an der Ladestation 2 angeordnete Steuereinrichtung 9 einen Schaltbefehl S. Die Steuereinrichtung 9 der Ladestation 2 setzt die Kontaktelemente 10 aufgrund des Schaltbefehls S unter Spannung, so dass ein Ladestrom I aus einem Wechselspannungsnetz 13 über die Kontaktelemente 10 der Ladestation 2, die Kontaktanordnung 11 des Straßenfahrzeugs 1 und einen Ladestromrichter 14 in einen elektrischen Energiespeicher 6 des Straßenfahrzeugs 1 eingespeist wird. Der Ladestromrichter 14 stellt in Abhängigkeit von der Steuereinrichtung 8 des Straßenfahrzeugs 1 vorgegebenen Sollwerten U*, I* eine vom Ladestromrichter 14 abgegebene Ausgangsspannung U und/oder den Ladestrom I ein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ladeverfahren für ein batteriefahrtfähiges Straßenfahrzeug (1), das mindestens eine elektrische Maschine (3) aufweist, die in einem Fahrbetrieb des Straßenfahrzeugs (1) mittels eines Traktionsstromrichters (5) des Straßenfahrzeugs (1) aus einem elektrischen Energiespeicher (6) des Straßenfahrzeugs (1) gespeist wird,
- wobei das Straßenfahrzeug (1) eine Ladestation (2) anfährt,
- wobei unter Steuerung durch eine auf dem Straßenfahrzeug (1) angeordnete Steuereinrichtung (8) eine an einer Oberseite (12) des Straßenfahrzeugs (1) auf dem Straßenfahrzeug (1) angeordnete Kontaktanordnung (11) und oberhalb des Straßenfahrzeugs (1) angeordnete Kontaktelemente (10) der Ladestation (2) miteinander in Kontakt gebracht werden,
- wobei die Steuereinrichtung (8) des Straßenfahrzeugs (1) leitungslos an eine an der Ladestation (2) angeordnete Steuereinrichtung (9) einen Schaltbefehl (S) übermittelt,
- wobei die Steuereinrichtung (9) der Ladestation (2) die Kontaktelemente (10) aufgrund des Schaltbefehls (S) unter Spannung setzt, so dass ein Ladestrom (I) aus einem Wechselspannungsnetz (13) über die Kontaktelemente (10) der Ladestation (2), die Kontaktanordnung (11) des Straßenfahrzeugs (1) und einen Ladestromrichter (14) in den elektrischen Energiespeicher (6) des Straßenfahrzeugs (1) eingespeist wird,
- wobei der Ladestromrichter (14) in Abhängigkeit von von der Steuereinrichtung (8) des Straßenfahrzeugs (1) vorgegebenen Sollwerten (U*, I*) eine vom Ladestromrichter (14) abgegebene Ausgangsspannung (U) und/oder den Ladestrom (I) einstellt,
- wobei im Ladebetrieb des Straßenfahrzeugs (1) der Traktionsstromrichter (5) als Ladestromrichter (14) verwendet wird,
- wobei im Ladebetrieb eine Wicklung (W) der elektrischen Maschine (3) als Betriebsinduktivität des Ladestromrichters (14) verwendet wird und
- wobei das Wechselspannungsnetz (13) ein Drehstromnetz mit mehreren Phasen (16) ist und für jede Phase (16) jeweils ein eigenes Kontaktelement (10) vorhanden ist.

2. Ladeverfahren nach Anspruch 1, **dadurch ge**- **kennzeichnet**, dass die Ladestation (2) aus dem öffentlichen Stromversorgungsnetz mit elektrischer Energie versorgt wird.

3. Ladeverfahren nach Anspruch 1 oder 2, **dadurch gekennzeichnet, dass** mittels eines in der Ladestation (2) angeordneten Transformators (17) eine Potenzialtrennung der Kontaktelemente (10) der Ladestation (2) von einer Energieversorgung der Ladestation (2) erfolgt.

4. Batteriefahrtfähiges Straßenfahrzeug,
- wobei das Straßenfahrzeug einen elektrischen Energiespeicher (6) aufweist,
- wobei das Straßenfahrzeug mindestens eine elektrische Maschine (3) aufweist, die in einem Fahrbetrieb des Straßenfahrzeugs mittels eines Traktionsstromrichters (5) des Straßenfahrzeugs aus dem elektrischen Energiespeicher (6) des Straßenfahrzeugs gespeist wird,
- wobei an einer Oberseite (12) des Straßenfahrzeugs eine Kontaktanordnung (11) angeordnet ist, die unter Steuerung durch eine auf dem Straßenfahrzeug angeordnete Steuereinrichtung (8) mit oberhalb des Straßenfahrzeugs (1) angeordneten Kontaktelementen (10) einer Ladestation (2) für das batteriefahrtfähige Straßenfahrzeug in Kontakt gebracht wird,
- wobei von der Steuereinrichtung (8) des Straßenfahrzeugs leitungslos ein Schaltbefehl (S) an eine an der Ladestation (2) angeordnete Steuereinrichtung (9) übermittelt wird, aufgrund dessen die Steuereinrichtung (9) der Ladestation (2) die Kontaktelemente (10) unter Spannung setzt und ein Ladestrom (I) aus einem Wechselspannungsnetz (13) über die Kontaktelemente (10) der Ladestation (2), die Kontaktanordnung (11) des Straßenfahrzeugs und einen Ladestromrichter (14) in den elektrischen Energiespeicher (6) des Straßenfahrzeugs eingespeist wird,
- wobei von der Steuereinrichtung (8) des Straßenfahrzeugs Sollwerte (U*, I*) vorgegeben werden,
- wobei der Ladestromrichter (14) in Abhängigkeit von den vorgegebenen Sollwerten (U*, I*) eine vom Ladestromrichter (14) abgegebene Ausgangsspannung (U) und/oder den Ladestrom (I) einstellt,
- wobei im Ladebetrieb des Straßenfahrzeugs die Kontaktanordnung (11) mit dem Traktionsstromrichter (5) elektrisch verbunden ist, so dass der Traktionsstromrichter (5) als Ladestromrichter (14) verwendet wird,
- wobei im Ladebetrieb eine Wicklung (W) der elektrischen Maschine (3) als Betriebsinduktivität des Ladestromrichters (14) verwendet wird und
- wobei das Wechselspannungsnetz (13) ein Drehstromnetz mit mehreren Phasen (16) ist und die Kontaktanordnung (11) für jede Phase (16) des Drehstromnetzes (13) jeweils mindestens einen eigenen Kontakt (10) aufweist.

## Claims

1. Charging method for a road vehicle (1) capable of being battery driven, which road vehicle (1) has at least one electrical machine (3), which in drive mode of the road vehicle (1) is powered by an electric energy store (6) of the road vehicle (1) by means of a traction current converter (5) of the road vehicle (1),
- wherein the road vehicle (1) drives up to a charging station (2),
- wherein by the control of a control device (8) arranged on the road vehicle (1), a contact assembly (11) arranged on the road vehicle (1) on an upper face (12) of the road vehicle (1) and contact elements (10) of the charging station (2) arranged above the road vehicle (1) are brought into contact with one another,
- wherein the control device (8) of the road vehicle (1) transmits a switching command (S) in a cableless manner to a control device (9) arranged on the charging station (2),
- wherein as a result of the switching command (S), the control device (9) of the charging station (2) applies a voltage to the contact elements (10), such that a charging current (I) is fed from an alternating voltage supply system (13) to an electric energy store (6) of the road vehicle (1) via the contact elements (10) of the charging station (2), the contact assembly (11) of the road vehicle (1) and a charging current converter (14),
- wherein the charging current converter (14) sets an output voltage (U) provided by the charging current converter (14) and/or the charging current (I) in accordance with setpoint values (U*, I*) which are predetermined by the control device (8) of the road vehicle (1),
- wherein in charging mode of the road vehicle (1) the traction current converter (5) is used as a charging current converter (14),
- wherein in charging mode a winding (W) of the electrical machine (3) is used as an operating inductance of the charging current converter (14) and
- wherein the alternating voltage supply system network (13) is a three-phase network with a plurality of phases (16) and in that in each case a separate contact element (10) is present for each phase (16).

2. Charging method according to claim 1, **characterised in that** the charging station (2) is supplied with electrical energy from the mains power network.

3. Charging method according to claim 1 or 2, **characterised in that** by means of a transformer (17) arranged in the charging station (2) a separation takes place of the potential of the contact elements (10) of the charging station (2) from an energy supply of the charging station (2).

4. Road vehicle capable of being battery driven,
- wherein the road vehicle has an electric energy store (6),
- wherein the road vehicle has at least one electrical machine (3), which in drive mode of the road vehicle is powered by an electric energy store (6) of the road vehicle (1) by means of a traction current converter (5) of the road vehicle,
- wherein a contact assembly (11) is arranged on an upper face (12) of the road vehicle, said contact assembly being brought into contact, by the control of a control device (8) arranged on the road vehicle, with contact elements (10) of a charging station (2) arranged above the road vehicle (1), for the road vehicle capable of being battery driven,
- wherein a switching command (S) is transmitted to a control device (9) arranged on the charging station (2), in a cableless manner from the control device (8) of the road vehicle, as a result of which the control device (9) of the charging station (2) applies voltage to the contact elements (10) and feeds a charging current (I) from an alternating voltage supply system (13) to the electric energy store (6) of the road vehicle via the contact elements (10) of the charging station (2), the contact assembly (11) of the road vehicle and a charging current converter (14),
- wherein setpoint values (U*, I*) are predetermined by the control device (8) of the road vehicle, and
- wherein the charging current converter (14) sets an output voltage (U) provided by the charging current converter and/or the charging current (I), in accordance with the predetermined setpoint values (U*, I*)
- wherein in charging mode of the road vehicle the contact assembly (11) is electrically connected to the traction current converter (5), so that the traction current converter (5) is used as a charging current converter (14),
- wherein in charging mode a winding (W) of the electrical machine (3) is used as an operating inductance of the charging current converter (14) and
- wherein the alternating voltage supply system (13) is a three-phase network with a plurality of phases (16) and the contact assembly (11) has in each case at least one separate contact (10) for each phase (16) of the three-phase network (13).

## Revendications

1. Procédé de charge d'un véhicule ( 1 ) routier apte à fonctionner sur batterie, qui a au moins une machine ( 3 ) électrique, alimentée en marche du véhicule ( 1 ) routier au moyen d'un convertisseur ( 5 ) de traction du véhicule ( 1 ) routier, à partir d'un accumulateur ( 6 ) d'énergie électrique du véhicule ( 1 ) routier,
- dans lequel le véhicule ( 1 ) routier arrive à un poste ( 2 ) de charge,
- dans lequel, sous la commande d'un dispositif ( 8 ) de commande mis sur le véhicule ( 1 ) routier, on met en contact entre eux un agencement ( 11 ) de contact mis d'un côté ( 12 ) supérieur du véhicule ( 1 ) routier sur le véhicule ( 1 ) routier et des éléments ( 10 ) de contact disposés au-dessus du véhicule ( 1 ) routier du poste ( 2 ) de charge,
- dans lequel le dispositif ( 8 ) de commande du véhicule ( 1 ) routier transmet sans fil une instruction ( S ) de commutation à un dispositif ( 9 ) de commande disposé au poste ( 2 ) de charge,
- dans lequel le dispositif ( 9 ) de commande du poste ( 2 ) de charge met, sur la base de l'instruction ( S ) de commutation, les éléments ( 10 ) de contact sous tension, de manière à injecter dans l'accumulateur ( 6 ) d'énergie électrique du véhicule ( 1 ) ferroviaire, un courant ( I ) de charge à partir d'un réseau ( 13 ) de tension alternative, par l'intermédiaire des éléments ( 10 ) de contact du poste ( 2 ) de charge, de l'agencement ( 1 ) de contact du véhicule ( 1 ) routier et d'un convertisseur ( 14 ) de charge,
- dans lequel le convertisseur ( 14 ) de charge règle, en fonction de valeurs ( U*, I* ) de consigne données à l'avance par le dispositif ( 8 ) de commande du véhicule ( 1 ) routier, une tension ( U ) de sortie et/ou le courant ( I ) de charge cédé par le convertisseur ( 14 ) de charge,
- dans lequel lorsque le véhicule ( 1 ) routier est en charge, on utilise le convertisseur ( 5 ) de traction comme convertisseur ( 14 ) de charge,
- dans lequel, en charge, on utilise un enroulement ( W ) de la machine ( 3 ) électrique comme inductance de fonctionnement du convertisseur ( 14 ) de charge et
- dans lequel le réseau ( 13 ) de tension alternative est un réseau de courant triphasé ayant plusieurs phases ( 16 ) et chaque phase ( 16 ) a son propre élément ( 10 ) de contact.

2. Procédé de charge suivant la revendication 1, **caractérisé en ce que** l'on alimente le poste ( 2 ) de charge en énergie électrique à partir du réseau d'alimentation en courant public.

3. Procédé de charge suivant la revendication 1 ou 2, **caractérisé en ce qu'**une séparation de potentiel des éléments ( 10 ) de contact du poste ( 2 ) de charge d'une alimentation en énergie du poste ( 2 ) de charge s'effectue au moyen d'un transformateur ( 17 ) disposé dans le poste ( 2 ) de charge.

4. Véhicule routier apte à fonctionner sur batterie,
- dans lequel le véhicule routier a un accumulateur ( 6 ) d'énergie électrique,
- dans lequel le véhicule routier a au moins une machine ( 3 ) électrique, qui, lorsque le véhicule routier est en marche, est alimentée à partir de l'accumulateur ( 6 ) d'énergie électrique du véhicule routier au moyen d'un convertisseur ( 5 ) de traction du véhicule routier,
- dans lequel il est disposé, sur un côté ( 12 ) supérieur du véhicule routier, un agencement ( 11 ) de contact, qui, sous la commande d'un dispositif ( 8 ) de commande mis sur le véhicule routier, est mis en contact avec des éléments ( 10 ) de contact disposés au-dessus du véhicule ( 1 ) routier d'un poste ( 2 ) de charge du véhicule routier apte à fonctionner sur batterie,
- dans lequel il est transmis, par le dispositif ( 8 ) de commande du véhicule routier sans fil, une instruction ( S ) de commutation à un dispositif ( 9 ) de commande mis sur le poste ( 2 ) de charge, sur la base de laquelle le dispositif ( 9 ) de commande du poste ( 2 ) de charge met les éléments ( 10 ) de contact sous tension et injecte, dans l'accumulateur ( 6 ) d'énergie électrique du véhicule routier, un courant ( I ) de charge à partir d'un réseau ( 13 ) à tension alternative par l'intermédiaire des éléments ( 10 ) de contact du poste ( 2 ) de charge, de l'agencement ( 11 ) de contact du véhicule routier et d'un convertisseur ( 14 ) de charge,
- dans lequel il est prescrit, par le dispositif ( 8 ) de commande du véhicule routier, des valeurs ( U*, I* ) de consigne,
- dans lequel le convertisseur ( 14 ) de charge règle, en fonction des valeurs ( U*,I* ) de consigne de données à l'avance, une tension ( U ) de sortie et/ou le courant ( I ) de charge cédé par le convertisseur ( 14 ) de charge,
- dans lequel, lorsque le véhicule routier est en charge, l'agencement ( 11 ) de contact est relié électriquement au convertisseur ( 5 ) de traction, de manière à utiliser le convertisseur ( 5 ) de traction comme convertisseur ( 14 ) de charge,
- dans lequel, en charge, un enroulement ( W ), la machine ( 3 ) électrique est utilisée comme inductance de fonctionnement du convertisseur ( 14 ) de charge et
- dans lequel le réseau ( 3 ) à tension alternative est un réseau triphasé ayant plusieurs phases ( 16 ) et l'agencement ( 11 ) de contact a, pour chaque phase ( 16 ) du réseau ( 13 ) triphasé, respectivement un propre contact ( 10 ).
